# EUROPEAN PATENT APPLICATION

(11) **EP 4 443 302 A1**
(43) Date of publication of application: **09.10.2024**
(21) Application number: 24167644.4
(22) Date of filing: 28.03.2024
(51) Int. Cl.: G06F 11/34, G06F 11/36

(54) **SYSTEM AND METHOD FOR CHECKING A CODEBASE**

(30) Priority: 04.04.2023 EP 23166572
(71) Applicant: TechMiners GmbH, 14050 Berlin (DE)
(72) Inventor: Frieling, Thomas, 14050 Berlin (DE); Beckmann, Christoph, 14050 Berlin (DE)
(74) Representative: Stellbrink & Partner Patentanwälte mbB

(57) **Abstract**

The present invention relates to a method comprising retrieving from a database, data related to a codebase, analyzing the retrieved data, and performing, based at least on a result of the analysis of the retrieved data, an automated check for a proper operation of the codebase. The present invention also relates to a system configured to perform the method and to a corresponding computer program product.

## Description

### Field

The present invention relates generally to the field of computing. More particularly, it relates to a system and method for automatically assessing a codebase for proper operation.

### Background

We are living in a digital era. Software or software-based applications are omnipresent. Software, or more generally, codebases, affect practically every aspect of our lives. Even in areas that pose a danger to life, tasks are accomplished by means of software. Further, software must be constantly updated or re-purposed in response to changing environments where it is run. It is, thus, crucial to ensure that software operates properly. A proper operation of the codebase may comprise, for example, that the codebase returns an expected ("correct") output for a given input. However, checking that the codebase gives a "correct" output for every valid input is impossible. Therefore, typically, a suite of test routines is associated with a codebase to check that it returns the "correct" output for a finite set of given inputs.

It may, however, not be sufficient to check that the codebase returns the "correct" output. It may, for example, also be of advantage to check how efficiently does the codebase return the "correct" output. Or, in order that the codebase may be amended in response to changing domains of applicability, it may be of advantage to check how easily the codebase may be amended. Further, the codebase may depend on external libraries/modules for its operation and it may be of advantage to determine a resilience of the codebase to changes in the external libraries/modules. Yet further, as software pervades ever-broadening domains of life, it may be of advantage to ensure that the software complies with legal requirements. Yet further, as codebases grow larger to address more complex problems, a plurality of people may be required to work on the codebase. It may, then, be of advantage to ensure that the codebase adheres to conventions and standards to allow the various people to work on the codebase easily.

Typical approaches to testing software, or codebases, may not be directed to any, or only to a few, of the aspects described above. Also, not all codebases may comprise exhaustive testing routines directed at testing all, or at least most, of the codebase.

### Summary

In light of the above, it is an object of the present invention to overcome or at least alleviate the shortcomings of the prior art. More particularly, it is an object of the present invention to provide a method and a system for automatically assessing a codebase for proper operation. Proper operation of the codebase may comprise, for example, adherence to coding conventions, compilation, bundling, and execution without errors, and various other aspects, as described further below.

Note that, whenever "checking for" an aspect is used in the following, it should be understood that "checking for" may comprise checking for a presence/absence of the aspect as applicable.

According to a first aspect, the present invention relates to a method comprising: retrieving from a database, data related to a codebase, analyzing the retrieved data, and performing, based at least on a result of the analysis of the retrieved data, an automated check for a proper operation of the codebase.

Alternatively, or additionally, the method may comprise performing an automated assessment and/or an automated analysis for a proper operation of the codebase.

The method may further comprise retrieving machine code-based information for the codebase and modeling, based on the machine code-based information, a check for a proper operation of the codebase. The machine code-based information may be particularly advantageous when assessing, for example, memory leaks or efficiency of the codebase. The method may then further comprise generating a notification based on detection of a leak, for example.

The modeling of the check may comprise, at least in part, an automated modeling.

The data related to a codebase may comprise data related to an amendment to the codebase. The data related to an amendment may at least comprise data representing an amendment to the codebase. For example, the data relating to an amendment may comprise the exact changes made to the codebase by the amendment. Alternatively, or additionally, the data relating to an amendment may, for example, comprise a description in natural language (as opposed to a programming language) describing/representing the amendment.

Generally, an amendment may be sent to the codebase, and may have to be reviewed before being accepted into the codebase. In the following, an amendment is to be understood to comprise an amendment that has already been accepted into the codebase. Note, however, that the data relating to an amendment may comprise data relating to the sending of the amendment as well as to the acceptance of the amendment. For example, the data may comprise data relating to a sender node of the amendment as well as data relating to one or more node(s) that review the amendment before it is accepted.

The data related to a codebase may comprise data related to a plurality of amendments to the codebase. Data relating to a plurality of amendments may be understood to comprise data relating to each of the plurality of amendments, wherein the data related to each of the plurality of amendments may comprise the data related to an amendment as described herein.

The method may comprise retrieving from the database, the data related to a plurality of amendments to the codebase.

The data related to an amendment may comprise a time of the amendment. This may be of advantage in determining, for example, the last time an amendment was made to a defined part of the codebase, that may be used to check for a proper operation of the codebase. The time of the amendment may comprise any of the time at which the amendment was sent to the codebase or the time at which the amendment was accepted. The time period between sending the amendment and accepting it may be of advantage in checking for the proper operation of the codebase.

The amendment may be sent to the codebase by a sender node, and the data related to an amendment may comprise data related to the sender node.

The data related to an amendment may comprise an identifier associated with the sender node. The identifier associated with the sender node may also be referred to as a sender node identifier. The sender node identifier may comprise, for example, an IP address, a Mac address, or an authentication identifier needed to send amendments to the codebase. Note that the above listing is not exhaustive and should be considered exemplary but not limiting. Other identifiers may also be used to identify the sender node.

The data related to an amendment may comprise a message. The message may comprise, for example, a high-level description of what the amendment is intended to do, of an algorithm being implemented in the amendment, or a documentation of, for example, variables and methods implemented in the amendment.

The data related to an amendment may comprise a trigger identifier associated with a trigger for the amendment. For example, an amendment may be made to address an error, such as a runtime error, in the codebase. The error may then correspond to the trigger for the amendment. Further exemplarily, a plurality of errors may be encountered in the execution of the codebase and an identifier may be used to label each of the plurality of errors. The error identifier may then correspond to the trigger identifier.

The trigger identifiers associated with the trigger for each of a plurality of amendments may be in correspondence with one another. This may be the case, for example, when the plurality of amendments is directed to fixing the same individual or group of errors.

The data related to an amendment may comprise the amendment to the codebase, or at least a part thereof. In other words, the data related to an amendment may comprise the exact changes made to the codebase, such as the statements deleted, the statements modified, or the statements added.

The data related to an amendment may comprise a number of lines added to, modified in, or deleted from the codebase. Lines may be understood to also comprise statements, i.e., the data related to an amendment may not comprise empty lines. Further, the data related to an amendment may not comprise lines comprising comments.

The data related to an amendment may comprise a location in the codebase of the amendment. The location may be specified by any of a package, a class, a module, or a function in which the amendment is made. Alternatively, or additionally, the location may be specified with respect to a context for the amendment, viz., a feature/error that prompted the amendment.

The data related to a codebase may comprise a resource consumption data, or at least data related thereto, of the sender node as described above. The resource may comprise, for example, any of a bandwidth, a computing power, a memory space, or any other suitable resource allocated to/consumed by the sender node. The resource consumption may be determined, for example, as a cumulative consumption over a period of time. For example, the resource consumption may be determined as the cumulative computing time for the sender node between the time a first amendment was sent by the sender node and the time a second amendment was sent by the sender node.

Alternatively, or additionally, the resource consumption data may be determined based on resources allocated to the sender node. Thus, resource consumption may be understood to also comprise resource allocation. The resource may alternatively, or additionally, comprise data representing operation of the codebase by secondary factors such as personal data of a sender associated with the sender node of an amendment, for example. The database may be configured to also store data related to the consumption of the resource as described above and such data may be retrieved.

The data related to a codebase may comprise the codebase, or at least a part thereof. In other words, the codebase, particularly the statements comprised by the codebase, may be assessed for proper operation. The data related to the codebase and the codebase may be stored on the same or on different databases, as described further below. In general, the method may be understood to also comprise retrieving data related to a codebase from a plurality of databases.

The data related to a codebase may comprise data related to a performance issue in the codebase. Performance issues may comprise runtime errors, detected "code smells", or any other such issues that adversely affect the performance of the codebase.

Analyzing the retrieved data may comprise transforming the data related to a codebase. Transforming the data may be of particular advantage when the data related to a codebase comprises parts that originate from different sources. These parts may then, for example, be formatted differently but may comprise the same or at least similar information that may be used to check for the proper operation of the codebase. Transforming the data may generally be understood to comprise extracting information, relevant to the analysis, from the data related to a codebase.

The transformed data may have a size smaller, equal to, or greater than the data related to a codebase retrieved from the database.

Transforming the data may comprise enriching the data, comprising using data external to the codebase to transform, at least in part, the data. Enriching the data may comprise, for example, using artificial intelligence-based models for transforming the data related to a codebase that may have been trained using data external to the codebase. In the following, whenever reference is made to artificial intelligence-based models, it may be understood that the artificial intelligence-based model may have been trained on data external to the codebase and, so, their use may be considered to comprise enrichment of data.

In particular, data enrichment may be used for language analysis (comprising sentiment analysis) of the data related to a codebase, or at least a part thereof. One or more labels may be associated with one or more parts of the data related to a codebase based on the language analysis of the one or more parts. These labels may also be understood to be comprised in the numerical values associated with amendments to the codebase as described below.

Transforming the data may comprise cleaning the data. Cleaning the data may comprise determining parts of the data that may be relevant to the analysis for proper operation of the codebase.

Cleaning the data may comprise tagging a part of the data as irrelevant. Thus, parts that may not be relevant for the analysis may be easily identified. For example, an irrelevant part may comprise natural language text that may describe an amendment. For example, the data related to an amendment may comprise the message "this amendment is aimed at implementing this algorithm". In this message, for example, the parts "this", "is aimed at" may be labelled as irrelevant.

Cleaning the data may comprise removing a part of the data. Preferably, the part of the data removed may have been tagged as irrelevant. This may comprise, for example, removing parts of the data that are duplicated or parts of the data that may be desired to be hidden for intellectual property reasons.

Cleaning the data may comprise modifying parts of the data to support efficient and correct data analysis. For example, cleaning the data may comprise making sure that different sender node identifiers are identified as the same sender, even if they are not exactly the same due to typos, abbreviation, renaming, or pseudonyms.

Transforming the data may comprise determining a connection/relationship between a plurality of parts of the data. Connecting the plurality of parts may be of advantage in further analysis of the data and may be based, at least in part, on the further analysis to be performed. For example, the plurality of parts may comprise data related to amendments to a single function/module in the codebase that may be connected based thereon. Further analysis of the connected parts may, for example, be aimed at determining a frequency of amendments to a function in the codebase.

Determining the connection may be based, at least in part, on the sender node identifier data. This may be of particular advantage in determining an efficiency of the sender node. For example, a larger number of amendments associated with a sender node may indicate a higher efficiency.

Determining the connection may comprise predicting, based on an artificial intelligence-based model, a label for a part of the data related to the codebase. By assigning the same, or at least similar, labels to the plurality of parts as described above, the plurality of parts may be connected/associated/related with each other. The artificial intelligence-based model may comprise, for example, a supervised learning-based model, that may be trained using labeled data similar to the data related to a codebase, wherein the labels may connect parts of the data desired to be connected.

Determining the connection may be based, at least in part, on a fuzzy logic-based analysis of the data related to the codebase, or at least a part thereof.

Transforming the data may comprise associating a numerical value with an amendment to the codebase based, at least in part, on the data related to the amendment. The numerical value associated with an amendment may represent, at least in part, any of a complexity, an impact, or an importance of the amendment. For example, the data related to an amendment may comprise the trigger identifier as described above, wherein the trigger identifier may correspond to a critical error in the codebase. The numerical value associated with amendments associated with the critical error may then be higher than the numerical value associated with amendments associated with a less critical error, for example. Further exemplarily, amendments associated with a frequently used feature, as also determined from the trigger identifier, may also be associated with a higher numerical value.

Associating the numerical value may comprise predicting, based on an artificial intelligence-based model, a label for the amendment to the codebase. The label may correspond to the numerical value to be associated with the amendment. For example, the label may comprise a number between 1 and 5 (both included), with 1 representing an amendment with a lower complexity, impact, or importance, and 5 representing an amendment with a higher complexity, impact, or importance. The number of labels may vary depending on a desired refinement, for example.

An input to the artificial intelligence-based model may comprise the data related to an amendment, or at least a part thereof. Preferably, the input may comprise the cleaned data related to an amendment as described above. However, the artificial intelligence-based model may be configured to also accept the "raw" data retrieved from the database. The artificial intelligence-based model may comprise a supervised learning-based model that may be trained with labeled data similar to the cleaned or "raw" data related to an amendment. Further, the input may comprise data related to a plurality of amendments.

Transforming the data may comprise standardizing the data by transforming the data into a common format that is consistent across all data sources, resolving inconsistencies, and transforming the data into a format that is suitable for analysis. Pull requests, for example, may come from different data sources. Therefore, they may sometimes be called "merge requests" and may carry their information in different data formats. To allow analysis, all pull requests may have to be transformed into the same data format, independently of their imported (raw) format.

Standardizing the data may comprise associating a label with a part of the data. Standardizing the data may further comprise associating a plurality of labels with a part of the data.

The label may comprise one of a plurality of pre-defined labels.

The plurality of pre-defined labels may comprise labels indicating a type of the data. The type of data may indicate, for example, that the data may comprise a "pull request" regardless of it being named a "pull request" or a "merge request", or that the data may comprise a "comment" regardless of the formatting (text, HTML, or markup, for example) of the "comment". Further exemplarily, the labels may comprise "new functionality", "cleanup", "optimization", or "bug fix".

In general, the plurality of pre-defined labels may comprise distinct labels that may each describe the information content of the labeled part of the retrieved data. An artificial intelligence-based model may be trained to assign an appropriate label (or none) to a part of the retrieved data. The artificial-intelligence based model may be configured for sentiment analysis of the retrieved data and to assign a label based thereon.

Standardizing the data may comprise extracting a plurality of labeled parts of the data, wherein a label associated with each of the plurality of parts is significantly identical. For example, different parts of the data may have been labeled "pull request" as described above.

Standardizing the data may comprise extracting all such parts and, for example, categorizing them as "pull requests".

The method may comprise sending the transformed data to a transformed data database. Storing the transformed data in a transformed database may be of advantage in allowing access to the transformed data at a later time, for example.

Analyzing the retrieved data may comprise analyzing the transformed data.

The method may comprise retrieving data from the transformed data database.

Analyzing the transformed data may comprise extracting the time of amendment for each of a plurality of amendments. Further analysis of the transformed data may, thus, be based on the time of amendment for one, preferably more, of the plurality of amendments.

Analyzing the transformed data may comprise extracting the sender node identifier for each of a plurality of amendments. Note that the plurality of amendments for which the sender node identifier is extracted may comprise a subset of the plurality of amendments for which data is retrieved from the database, i.e., in other words, the sender node identifier may be extracted for only some of the plurality of amendments described above. Alternatively, or additionally, the sender node identifier may be extracted for each of the plurality of amendments for which data is retrieved from the database.

The method may further comprise identifying all the amendments associated with a defined sender node identifier. This may be of advantage in determining an efficiency of the defined sender node, for example.

Analyzing the transformed data may comprise extracting the numerical value associated with each of a plurality of amendments.

The numerical value associated with each amendment may be at least as large as a pre-defined minimum. In other words, an analysis may be carried out only for amendments that have a complexity, an impact, or an importance above a certain threshold. In particular, the analysis may be carried out for amendments associated with a defined sender node identifier and that have a complexity, an impact, or an importance above a certain threshold.

Analyzing the transformed data may comprise determining a first time of amendment associated with the defined sender node identifier.

Analyzing the transformed data may comprise determining a last time of amendment associated with the defined sender node identifier. Thus, for example, a total active time, corresponding to the difference between the last and the first times of amendment, of the defined sender node may be determined. The total active time may be compared with the total resource allocated to/consumed by the defined sender node, for example.

Analyzing the transformed data may comprise identifying a plurality of amendments based, at least in part, on their location. This may be of advantage in identifying, in further analysis, for example, a sender node with the most amendments to a defined location in the codebase.

Analyzing the transformed data may comprise determining a total numerical value associated with the plurality of amendments in a defined time interval. This may be of advantage in determining the total complexity, impact, or importance associated with a sender node in the defined time interval.

Analyzing the transformed data may comprise determining the distribution of the total numerical value with respect to the sender node identifier associated with each of the plurality of amendments described above. Each of the plurality of amendments may be associated with the same, or at least substantially similar, location in the codebase. This may be of advantage in determining an area of maximum contribution of the sender nodes, for example.

The resource efficiency may be based on the total numerical value associated with a plurality of amendments associated with the defined sender node identifier described above. For example, the plurality of amendments may comprise all the amendments sent by the sender node in a defined time interval. Alternatively, or additionally, the plurality of amendments may comprise all the amendments sent by the sender node in/around a defined location in the codebase. Or, the plurality of amendments may be defined by both their location and the time of amendment. Generally, it may be understood that any suitable characteristics of an amendment may be used to determine the resource efficiency.

Analyzing the transformed data may comprise determining a bus factor for the sender node. The bus factor may be an indicator of a risk associated in case the sender node fails.

Determining the bus factor may comprise determining a statistical measure of the numerical values associated with a plurality of amendments associated with the sender node. The statistical measure may be based, at least in part, on weights assigned to each of the plurality of amendments associated with the sender node.

The bus factor may be based, at least in part, on the time of amendment for each of a plurality of amendments. For example, a weight may be assigned to each amendment based on the time of the amendment, wherein, for example, a lower weight may be associated with an earlier amendment.

The bus factor may be based, at least in part, on a weighted average of the numerical values associated with the plurality of amendments, wherein the weight assigned to each numerical value is inversely proportional to the time since the amendment.

Analyzing the transformed data may be based on the resource consumption data, or data related thereto, of the sender node. The data related to the resource consumption data may comprise resource allocation data as described above. In particular, analyzing the transformed data may comprise determining a resource consumption efficiency of the sender node.

Analyzing the transformed data may comprise determining a resource consumption per unit time of the sender node. This may be determined, for example, based on the total active time of the sender node as described above. The resource consumption efficiency may be based, at least in part, on the resource consumption per unit time.

Analyzing the transformed data may comprise determining a resource consumption per unit of the total numerical value associated with the plurality of amendments associated with the sender node. That is, the total numerical value associated with a plurality of amendments sent by the sender node may be determined as described above. Further, the total resource consumption of the sender node may be determined, preferably over the same time period as the plurality of amendments. The analysis may then comprise determining, for example, a ratio of the total numerical value and the total resource consumption. The resource consumption efficiency as described above may be based, at least in part, on the total numerical value associated with the plurality of amendments associated with the sender node.

The method may comprise displaying a result of the analysis of the data related to the codebase. The result may be displayed, for example, on a display unit configured therefor.

The method may comprise generating a report based, at least in part, on a result of the analysis of the data related to the codebase. The report may comprise recommendations for re-distribution of resources or revamping workflows, for example. Alternatively, or additionally, the method may comprise generating an overall score indicative of the performance of the codebase based on the analysis of the data related to the codebase.

The method may further comprise retrieving and analyzing data related to a plurality of codebases.

The plurality of codebases may comprise a first codebase and a second codebase.

The method may comprise comparing a result of analyzing the data related to the first codebase and a result of analyzing the data related to the second codebase.

The method may comprise generating a report based, at least in part, on the comparison of the result of analyzing the data related to the first codebase and the result of analyzing the data related to the second codebase. Thus, for example, the method may comprise assigning an overall rank/score to the codebase, based on the comparison with one (or more) other codebase(s).

Checking for a proper operation of the codebase may comprise checking that the codebase, or at least a part thereof, adheres to a code convention and/or a code style. This may comprise, for example, checking that names in the codebase (for variables, methods, modules, classes, and so on) adhere to a defined pattern, that names have a certain minimum length based on a context in which they appear, that names are based on words of a natural language such as English, or other similar checks.

The codebase may comprise a function, wherein checking for a proper operation of the codebase may comprise checking that a number of statements in the function is less than a pre-defined maximum number of statements. A function may also be understood to comprise a method. In the following, the term "function" will be used. However, it may be understood, that also a method is comprised in a "function".

The pre-defined maximum number of statements may be between 15 and 60, preferably between 20 and 45, further preferably between 25 and 35. Thus, longer functions may indicate an improper operation of the codebase.

The function may be configured to accept one or more parameters, and checking for a proper operation of the codebase may comprise checking that each of the one or more parameters is documented. Documenting a parameter may be understood to comprise at least specifying a type of the parameter. Further, documenting a parameter may comprise, for example, describing how the parameter and/or the value it holds is used in the function. The method may, for example, determine a fraction of all parameters that are documented, and based thereon, determine whether or not the codebase operates properly.

The function may be configured to return one or more values, and checking for a proper operation of the codebase may comprise checking that each of the one or more return values is documented. Documenting a return value may be understood to comprise at least specifying a type of the return value. Further, documenting a return value may comprise, for example, describing how the return value is calculated in the function, what range of return values is possible, and so on.

The codebase may comprise a class/module comprising one or more functions, and checking for a proper operation of the codebase may comprise checking that the number of functions in the class is less than a pre-defined maximum number of functions.

The pre-defined maximum number of functions may be between 5 and 60, preferably between 10 and 45, further preferably between 25 and 35.

The class may comprise one or more parameters, and checking for a proper operation of the codebase may comprise checking that each of the one or more parameters is documented. In particular, the parameters may also be referred to as instance variables. Documenting an instance variable may be understood to comprise documenting a parameter as described above. Parameters of a class may be understood to also comprise attributes of a class. For example, a class may comprise attributes (or parameters) representing the state of an object of the class, and methods (or functions) to perform different functions on those attributes.

Checking for a proper operation of the codebase may comprise checking that each of the one or more functions is documented. Documenting a function may comprise any of documenting each of the parameters the function accepts as input, documenting each of the return values that the function returns, describing how the input parameters are used to obtain any of the return values. Documenting a function may comprise describing the purpose of a function, what the function does, and/or how to use it. Documenting a function may further comprise describing a runtime of the function as a function of the size of any of the input parameters, possible algorithms for implementing the function, or any other suitable information. The method may comprise determining, for example, a fraction of all functions that are documented. The method may further comprise determining a level of documentation of the function. For example, a function with documentation for only each of the input parameters may be considered a lesser documented function than a function with documentation for each of the input parameters and the return values.

Checking for a proper operation of the codebase may comprise checking for a presence of a test routine configured to test, at least a part of, the codebase. The test routine may be configured, in particular, to test at least one function in the codebase. The test routine may send one or more defined values as input parameters to the function, where an expected output of the function for the defined values may be known. The test routine may then compare the actual return value from the function on the defined values to the expected value.

Checking for a proper operation of the codebase may comprise checking for a presence of one or more test routines configured to test a part, at least as large as a pre-defined minimum, of the codebase. In other words, the method may comprise determining a fraction of all functions in the codebase for which at least one test routine is present. For example, the codebase may comprise 10 functions in all. Then, checking for a proper operation of the codebase may comprise determining the number of functions out of 10 for which at least one test routine exists.

The pre-defined minimum may be at least 50%, preferably at least 75%, further preferably at least 90%. Thus, for the example above, it may be preferable to have at least one test routine for at least 8 out of the 10 functions, to ensure proper operation of the codebase.

Checking for a proper operation of the codebase may comprise checking that the test routine is configured for automatic execution.

Checking for a proper operation of the codebase may further comprise determining a frequency of automatic execution of the test routine. In other words, the test routine may be configured to execute automatically at defined stages, for example, every time the codebase is updated or before it is rolled-out.

Checking for a proper operation may comprise determining each of the defined stages at which automatic executions of the test routine are configured. The defined stages may be compared, for example, with pre-defined stages at which tests may have to be carried out. This may be of advantage in ensuring that tests are executed for different stages.

Checking for a proper operation of the codebase may comprise determining a frequency of execution for at least a part of the codebase. The frequency of execution may be determined, for example, based on the machine code-based information described above. Alternatively, or additionally, a profiler may be used.

Checking for a proper operation of the codebase may further comprise determining a frequency of execution for each of a plurality of parts of the codebase.

Checking for a proper operation of the codebase may further comprise determining a distribution of the plurality of parts based, at least in part, on the frequency of execution for each of the plurality of parts. In other words, the most and/or least frequently executed parts of the codebase may be determined.

Checking for a proper operation of the codebase may comprise checking for an efficiency of at least a part of the codebase. Preferably, the efficiency of the most frequently executed parts may be determined. Efficiency may be determined based on a runtime with respect to size of the input. For example, the codebase may be executed for inputs of various sizes and the time taken by a defined part of the codebase may be recorded for each size of the input. Based thereon, an efficiency of the defined part may be determined. A proper operation of the codebase may comprise, for example, ensuring that the efficiency of the most frequently executed part of the codebase is at most quadratic in the size of the input.

Checking for a proper operation of the codebase may comprise checking for the efficiency of each of a plurality of parts of the codebase.

The plurality of parts may comprise the top 10 percent, preferably the top 15 percent, further preferably the top 20 percent, of the most frequently executed parts.

The data related to a codebase may comprise data related to an API layer documentation of the codebase, and checking for a proper operation of the codebase may comprise checking that the API layer documentation adheres to an API layer documentation standard. For example, the method may comprise checking that the API layer documentation adheres to any of the OpenAPI or AsyncAPI specifications. The codebase, or at least a part thereof, may be used by an external application. An application programming interface layer, or API layer, may correspond to a representation of the codebase visible to the external application. The external application may make use of the API layer to use the codebase, or at least a part thereof, without having access to the internal implementation in the codebase. This may allow for better security and robustness of the codebase.

Checking for a proper operation of the codebase may comprise checking that access to the API layer is secured. In other words, only authorized nodes/programs/applications may access the API layer. This may be enabled by means of an authentication process such as a public-key authentication or an SSH authentication.

Checking for a proper operation of the codebase may comprise determining a refactoring and/or a revisiting frequency for at least a part of the codebase.

Checking for a proper operation of the codebase may comprise determining, for each amendment to at least a part of the codebase, the sender node identifier and determining, based thereon, that a plurality of sender node identifiers is associated with the part of the codebase. In other words, the number of sender node identifiers associated with a part of the codebase may be determined, based on the data related to the codebase. The part of the codebase may comprise, for example, a statement in the codebase. The method may then comprise determining a number of sender nodes associated with the part of the codebase. This may be of advantage in determining a risk to the part of the codebase if a defined sender node fails.

The data related to an amendment may further comprise data related to a review of the amendment, and checking for a proper operation of the codebase may comprise checking that each amendment to the codebase is reviewed. The method may comprise, for example, determine a fraction of all amendments that are reviewed before being accepted. Preferably, each amendment that is accepted may be reviewed for proper operation of the codebase.

Checking for a proper operation of the codebase may comprise checking for an ability of one or more applications represented by the codebase to be deployed automatically. In other words, the codebase may be used to automatically deploy an application, particularly following an amendment to the codebase, and that the codebase adheres to best practices of continuous integration/continuous deployment. For example, when an amendment is made to the codebase, a process may be started automatically that packages a new version of an application represented by the updated codebase and uploads that package to a web server.

Checking for an automated deployment ability may comprise checking for an ability to automatically provisioning of deployment infrastructure. In other words, the method may comprise checking that the codebase comprises, at least in part, code to provision infrastructure needed to execute the codebase. This may be of particular relevance when the codebase is executed on a shared computer, such as a cloud computing server.

Checking for a proper operation of the codebase may comprise checking for the association of a trigger identifier with each amendment to the codebase. In other words, checking for a proper operation may comprise ensuring that any, and all, amendments to the codebase are made in response to a trigger such that a correspondence may be established between the trigger and the amendment.

Checking for a proper operation of the codebase may comprise checking that the codebase can be compiled, built, auto-tested, bundled, and executed without errors. This may comprise, for example, ensuring that all necessary modules/classes can be compiled, the byte codes for each of the modules/classes can be generated, and the byte code can be bundled together as an application.

An external module/library may be used in the codebase, and checking for a proper operation of the codebase may comprise checking that no part of the module/library is copied into the codebase. In other words, the relevant part of the external module/library may be referenced by the codebase instead of being copied. This may allow safer dependence on the external module/library as any changes to the external module/library are automatically reflected in the codebase.

Checking for a proper operation of the codebase may comprise determining licensing information for the module/library. For example, only open-source modules/libraries distributed under specific licenses may be used. Or, necessary permissions/licenses have been obtained to use the external modules/libraries.

Checking for a proper operation of the codebase may comprise determining a version of the module/library used in the codebase. This may be of advantage in ensuring that the most updated, and/or most stable version of the external module/library is used by the codebase and any errors arising from errors in the external module/library are automatically fixed.

The codebase may be configured to authenticate/authorize a user based, at least in part, on an authentication/authorization framework/library, and checking for a proper operation of the codebase may comprise determining the authentication/authorization framework/library used by the codebase. This may be of advantage in ensuring that a popular, well-tested framework/library is being used.

Checking for a proper operation of the codebase may comprise checking that "natural" language used in the codebase is English. For example, "natural" language may be used for comments, variable names, function names, and so on.

Checking for a proper operation of the codebase may comprise checking that the data related to performance issues in the codebase described above comprises all the necessary information. The necessary information may be understood to comprise all the information required to define and reproduce the performance issue such as a description of the performance issue by describing an expected performance and an actual performance of the codebase, or at least a part thereof, steps to reproduce the performance issue, and a severity of the performance issue such as "low" or "critical".

According to a second aspect, the present invention relates to a system configured to: retrieve from a database, data related to a codebase, analyze the retrieved data, and perform, based at least on a result of the analysis of the retrieved data, an automated check for a proper operation of the codebase.

The data related to a codebase may comprise data related to an amendment to the codebase.

The data related to an amendment may comprise any of a time of amendment, a sender node identifier associated with a sender node of the amendment, a message associated with the amendment, a trigger identifier associated with the amendment, a location of the amendment, and a content of the amendment.

The data related to a codebase may comprise data related to a plurality of amendments to the codebase.

The data related to a codebase may comprise additional data.

The additional data may comprise resource consumption data for a sender node. The additional data may comprise data representative of the sender node, for example, personal data of a sender associated with the sender node.

The system may comprise a communication unit configured to communicate with the database.

The system may comprise a data processing unit.

The data processing unit may be configured to communicate with the communication unit.

The data processing unit may be configured to send a request to the communication unit to retrieve data from the database.

The data processing unit may be configured to receive the retrieved data from the communication unit.

Analyzing the retrieved data may comprise transforming the data related to a codebase, and the system may be configured to transform the retrieved data.

The system, particularly the data processing unit thereof, may comprise a data transform module configured to transform the data retrieved from the database, thereby generating transformed data.

The system may comprise a transformed data database. The transformed data database may comprise any suitable memory element.

The data transform module may be configured to send the transformed data to the transformed data database.

The data transform module may be configured to clean the retrieved data.

The data transform module may be configured to tag as irrelevant a part of the retrieved data.

The data transform module may be configured to remove a part of the retrieved data.

The data transform module may be configured to clean the retrieved data based, at least in part, on a heuristic.

The data transform module may be configured to clean the retrieved data based, at least in part, on an artificial intelligence-based model.

The data transform module may be configured to determine a connection/relationship between a plurality of parts of the retrieved data.

The data transform module may be configured to associate a numerical value with an amendment to the codebase based, at least in part, on the data related to the amendment.

The data transform module may be configured to associate a numerical value with each of a plurality of amendments to the codebase. The data transform module may be configured to further associate a plurality of numerical values with each of a plurality of amendments to the codebase. The plurality of numerical values may comprise values representing, for example, any of an estimate of a resource consumption for the amendment, an estimate for adherence to coding style as described above, or any other suitable numerical value.

The numerical value may be based on a complexity of the amendment to the codebase. The complexity of an amendment to the codebase may be measured using, for example, any of a cyclomatic complexity, Halstead's metrics that measure the number of linearly independent paths through a piece of code, a number of branches, loops, or variables used in the amendment, or other suitable metrics.

The numerical value may be at least as large as a pre-defined minimum value. For example, the pre-defined minimum value may be 0, and may indicate an amendment of very little complexity.

The numerical value may be at most as large as a pre-defined maximum value. For example, the pre-defined maximum value may be 100, and may indicate an amendment of the highest complexity. Preferably, however, the numerical value may not be bounded above.

The numerical value may comprise a natural number.

The numerical value may be associated based, at least in part, on an artificial intelligence-based model.

Alternatively, or additionally, the numerical value may be based, at least in part, on a heuristic, such as a number of statements added, modified, or deleted by the amendment.

The numerical value may be scaled by an appropriate scaling factor that may depend on a programming language used to make the amendment.

The data transform module may be further configured to standardize the retrieved data.

The data processing unit may comprise a data analysis module configured to accept an input and to carry out an analysis on the input. The analysis may be carried out based, at least in part, on an artificial intelligence-based model.

The data analysis module may be configured to receive, as input, the transformed data from the data transform module.

The data analysis module may be configured to retrieve, and accept as input, the transformed data from the transformed data database.

The data analysis module may be configured to identify a plurality of amendments associated with a defined sender node.

The numerical value associated with each of the plurality of amendments above may be at least as large as a pre-defined minimum.

The location associated with each of the plurality of amendments above may be comprised in a set of pre-defined locations.

The data analysis module may be configured to determine an active time for a defined sender node based on the data related to the plurality of amendments above.

The data analysis module may be configured to determine an earliest time of amendment for the defined sender node based on the plurality of amendments identified above.

The data analysis module may be configured to determine a latest time of amendment for the defined sender node based on the plurality of amendments identified above.

The system may be configured to determine a resource efficiency for the defined sender node.

The system may be configured to determine a bus factor for the defined sender node based, at least in part, on the above plurality of amendments associated with the defined sender node.

The bus factor may be based, at least in part, on the time of amendment for at least one amendment associated with the defined sender node.

The bus factor may be based, at least in part, on the numerical value associated with at least one amendment associated with the defined sender node.

The bus factor may be based, at least in part, on a statistical measure based on the plurality of amendments associated with the defined sender node.

The system may comprise a display unit.

The system may be configured to display a result of analyzing the data related to a codebase.

The display unit may be configured to communicate with the data processing unit.

The system may be configured to generate a report based, at least in part, on a result of analyzing the data related to a codebase.

The system may be configured to retrieve, and analyze, data related to a plurality of codebases.

The plurality of codebases may comprise a first codebase and a second codebase.

The system may be configured to compare a result of analyzing the data related to the first codebase and the data related to the second codebase.

The system may be configured to display data related to a result of the comparison between the result of analyzing the data related to the first codebase and the data related to the second codebase.

The report as described above may be based, at least in part, on a result of the comparison between the result of analyzing the data related to the first codebase and the data related to the second codebase.

The system may be configured to determine a performance metric for the codebase based on a result of analyzing the data related to the codebase.

The check for proper operation of the codebase may be based, at least in part, on the performance metric for the codebase.

The system may be configured to re-allocate resources to a sender node based, at least in part, on a result of analyzing the data related to a codebase.

The system may be configured to perform the method as described above.

According to a third aspect, the present invention relates to a computer program product comprising instructions, when run on a data processing unit of a system according to any of the preceding system embodiments, to perform the method according to any of the preceding method embodiments.

The present invention is also described by the following numbered embodiments.

Below, method embodiments will be discussed. These are abbreviated by the letter 'M' followed by a number. Whenever reference is, herein, made to the method embodiments, these embodiments are meant.

M1. A method comprising:
retrieving from a database, data related to a codebase,
analyzing the retrieved data, and
performing, based at least on a result of the analysis of the retrieved data, an automated check for a proper operation of the codebase.

M2. The method according to the preceding embodiment, wherein the method further comprises retrieving machine code-based information for the codebase and modeling, based on the machine code-based information, a check for a proper operation of the codebase.

M3. The method according to the preceding embodiment, wherein the modeling of the check comprises, at least in part, an automated modeling.

M4. The method according to any of the preceding method embodiments, wherein the data related to a codebase comprises data related to an amendment to the codebase.

M5. The method according to the preceding embodiment, wherein the data related to a codebase comprises data related to a plurality of amendments to the codebase.

M6. The method according to the preceding embodiment, wherein the method comprises retrieving from the database, the data related to a plurality of amendments to the codebase.

M7. The method according to any of the preceding method embodiments and with the features of embodiment M4, wherein the data related to an amendment comprise a time of the amendment.

M8. The method according to any of the preceding method embodiments and with the features of embodiment M4, wherein the amendment is sent to the codebase by a sender node, and wherein the data related to an amendment comprises data related to the sender node.

M9. The method according to the preceding embodiment, wherein the data related to an amendment comprise an identifier associated with the sender node.

M10. The method according to any of the preceding method embodiments and with the features of embodiment M4, wherein the data related to an amendment comprise a message.

M11. The method according to any of the preceding method embodiments and with the features of embodiment M4, wherein the data related to an amendment comprises a trigger identifier associated with a trigger for the amendment.

M12. The method according to the preceding embodiment and with the features of embodiment M5, wherein the trigger identifiers associated with the trigger for each of a plurality of amendments are in correspondence with one another.

M13. The method according to any of the preceding method embodiments and with the features of embodiment M4, wherein the data related to an amendment comprises the amendment to the codebase, or at least a part thereof.

M14. The method according to any of the preceding method embodiments and with the features of embodiment M4, wherein the data related to an amendment comprises a number of lines added to the codebase.

M15. The method according to any of the preceding method embodiments and with the features of embodiment M4, wherein the data related to an amendment comprises a number of lines deleted from the codebase.

M16. The method according to any of the preceding method embodiments and with the features of embodiment M4, wherein the data related to an amendment comprises a number of lines modified in the codebase.

M17. The method according to any of the preceding method embodiments and with the features of embodiment M4, wherein the data related to an amendment comprises a location in the codebase of the amendment.

M18. The method according to any of the preceding method embodiments and with the features of embodiment M8, wherein the data related to a codebase comprises a resource consumption data, or at least data related thereto, of the sender node.

M19. The method according to any of the preceding method embodiments, wherein the data related to a codebase comprises the codebase, or at least a part thereof.

M20. The method according to any of the preceding method embodiments, wherein the data related to a codebase comprises data related to a performance issue in the codebase.

M21. The method according to any of the preceding method embodiments, wherein analyzing the retrieved data comprises transforming the data related to a codebase.

M22. The method according to the preceding embodiment, wherein transforming the data comprises cleaning the data.

M23. The method according to the preceding embodiment, wherein cleaning the data comprises tagging a part of the data as irrelevant.

M24. The method according to any of the 2 preceding embodiments, wherein cleaning the data comprises removing a part of the data.

M25. The method according to any of the preceding method embodiments and with the features of embodiment M21, wherein transforming the data comprises determining a connection/relationship between a plurality of parts of the data.

M26. The method according to the preceding embodiment and with the features of embodiment M5, wherein determining the connection is based, at least in part, on the sender node identifier data.

M27. The method according to any of the 2 preceding embodiments, wherein determining the connection comprises predicting, based on an artificial intelligence-based model, a label for a part of the data related to the codebase.

M28. The method according to any of the 3 preceding embodiments, wherein determining the connection is based, at least in part, on a fuzzy logic-based analysis of the data related to the codebase, or at least a part thereof.

M29. The method according to any of the preceding method embodiments and with the features of embodiments M4, and M21, wherein transforming the data comprises associating a numerical value with an amendment to the codebase based, at least in part, on the data related to the amendment.

M30. The method according to the preceding embodiment, wherein associating the numerical value comprises predicting, based on an artificial intelligence-based model, a label for the amendment to the codebase.

M31. The method according to the preceding embodiment, wherein an input to the artificial intelligence-based model comprises the data related to an amendment, or at least a part thereof.

M32. The method according to any of the preceding method embodiments and with the features of embodiment M21, wherein transforming the data comprises standardizing the data.

M33. The method according to the preceding embodiment, wherein standardizing the data comprises associating a label with a part of the data.

M34. The method according to the preceding embodiment, wherein the label comprises one of a plurality of pre-defined labels.

M35. The method according to the preceding embodiment, wherein the plurality of pre-defined labels comprises labels indicating a type of the data.

M36. The method according to any of the 3 preceding embodiments, wherein standardizing the data comprises extracting a plurality of labeled parts of the data, wherein the label associated with each of the plurality of parts is significantly identical.

M37. The method according to any of the preceding method embodiments and with the features of embodiment M21, wherein the method comprises sending the transformed data to a transformed data database.

M38. The method according to any of the preceding method embodiments and with the features of embodiment M21, wherein the analyzing the retrieved data comprises analyzing the transformed data.

M39. The method according to the preceding embodiment and with the features of the penultimate embodiment, wherein the method comprises retrieving data from the transformed data database.

M40. The method according to any of the 2 preceding embodiments and with the features of embodiment M7, wherein analyzing the transformed data comprises extracting the time of amendment for each of a plurality of amendments.

M41. The method according to any of the 3 preceding embodiments and with the features of embodiment M9, wherein analyzing the transformed data comprises extracting the sender node identifier for each of a plurality of amendments.

M42. The method according to the preceding embodiment, wherein the method further comprises identifying all the amendments associated with a defined sender node identifier.

M43. The method according to any of the preceding method embodiments and with the features of embodiments M29, and M38, wherein analyzing the transformed data comprises extracting the numerical value associated with each of a plurality of amendments.

M44. The method according to the preceding embodiment and with the features of embodiment M42, wherein the numerical value associated with each amendment is at least as large as a pre-defined minimum.

M45. The method according to any of the preceding method embodiments and with the features of embodiments M40, and any of the embodiments M42, and M44, wherein analyzing the transformed data comprises determining a first time of amendment associated with the defined sender node identifier.

M46. The method according to any of the preceding method embodiments and with the features of embodiments M40, and any of the embodiments M42, and M44, wherein analyzing the transformed data comprises determining a last time of amendment associated with the defined sender node identifier.

M47. The method according to any of the preceding embodiments and with the features of embodiments M17, and M38, wherein analyzing the transformed data comprises identifying a plurality of amendments based, at least in part, on their location.

M48. The method according to the preceding embodiment and with the features of embodiment M40, and M43, wherein analyzing the transformed data comprises determining a total numerical value associated with the plurality of amendments in a defined time interval.

M49. The method according to the preceding embodiment and with the features of embodiment M42, wherein analyzing the transformed data comprises determining the distribution of the total numerical value with respect to the sender node identifier associated with each of the plurality of amendments.

M50. The method according to any of the preceding method embodiments and with the features of embodiments M8, and M38, wherein analyzing the transformed data comprises determining a bus factor for the sender node.

M51. The method according to the preceding embodiment and with the features of embodiments M42, and M43, wherein determining the bus factor comprises determining a statistical measure of the numerical values associated with a plurality of amendments associated with the sender node.

M52. The method according to any of the 2 preceding embodiments and with the features of embodiment M40, wherein the bus factor is based, at least in part, on the time of amendment for each of a plurality of amendments.

M53. The method according to the preceding embodiment and with the features of the penultimate embodiment, wherein the bus factor is based, at least in part, on a weighted average of the numerical values associated with the plurality of amendments, wherein the weight assigned to each numerical value is inversely proportional to the time since the amendment.

M54. The method according to any of the preceding method embodiments and with the features of embodiments M18, and M38, wherein analyzing the transformed data is based on the resource consumption data, or data related thereto, of the sender node.

M55. The method according to the preceding embodiment and with the features of embodiment M28, wherein analyzing the transformed data comprises determining a resource consumption per unit time of the sender node.

M56. The method according to any of the 2 preceding embodiments and with the features of embodiment M43, wherein analyzing the transformed data comprises determining a resource consumption per unit of the total numerical value associated with the plurality of amendments associated with the sender node.

M57. The method according to any of the preceding method embodiments, wherein the method comprises displaying a result of the analysis of the data related to the codebase.

M58. The method according to any of the preceding method embodiments, wherein the method comprises generating a report based, at least in part, on a result of the analysis of the data related to the codebase.

M59. The method according to any of the preceding method embodiments, wherein the method further comprises retrieving and analyzing data related to a plurality of codebases.

M60. The method according to the preceding embodiment, wherein the plurality of codebases comprises a first codebase and a second codebase.

M61. The method according to the preceding embodiment, wherein the method comprises comparing a result of analyzing the data related to the first codebase and a result of analyzing the data related to the second codebase.

M62. The method according to the preceding embodiment, wherein the method comprises generating a report based, at least in part, on the comparison of the result of analyzing the data related to the first codebase and the result of analyzing the data related to the second codebase.

M63. The method according to any of the preceding method embodiments, wherein checking for a proper operation of the codebase comprises checking that the codebase adheres to a code convention and/or a code style.

M64. The method according to any of the preceding method embodiments, wherein the codebase comprises a function, and wherein checking for a proper operation of the codebase comprises checking that a number of statements in the function is less than a pre-defined maximum number of statements.

M65. The method according to the preceding embodiment, wherein the pre-defined maximum number of statements is between 15 and 60, preferably between 20 and 45, further preferably between 25 and 35.

M66. The method according to any of the 2 preceding embodiments, wherein the function is configured to accept one or more parameters, and wherein checking for a proper operation of the codebase comprises checking that each of the one or more parameters is documented.

M67. The method according to any of the 3 preceding embodiments, wherein the function is configured to return one or more values, and wherein checking for a proper operation of the codebase comprises checking that each of the one or more return values is documented.

M68. The method according to any of the 4 preceding method embodiments, wherein the codebase comprises a class/module comprising one or more functions, and wherein checking for a proper operation of the codebase comprises checking that the number of functions in the class is less than a pre-defined maximum number of functions.

M69. The method according to the preceding embodiment, wherein the pre-defined maximum number of functions is between 5 and 60, preferably between 10 and 45, further preferably between 25 and 35.

M70. The method according to any of the 2 preceding embodiments, wherein the class comprises one or more parameters, and wherein checking for a proper operation of the codebase comprises checking that each of the one or more parameters is documented.

M71. The method according to any of the 3 preceding embodiments, wherein checking for a proper operation of the codebase comprises checking that each of the one or more functions is documented.

M72. The method according to any of the preceding method embodiments, wherein checking for a proper operation of the codebase comprises checking for a presence of a test routine configured to test, at least a part of, the codebase.

M73. The method according to the preceding embodiment, wherein checking for a proper operation of the codebase comprises checking for a presence of one or more test routines configured to test a part, at least as large as a pre-defined minimum, of the codebase.

M74. The method according to the preceding embodiment, wherein the pre-defined minimum is at least 50%, preferably at least 75%, further preferably at least 90%.

M75. The method according to any of the 3 preceding embodiments, wherein checking for a proper operation of the codebase comprises checking that the test routine is configured for automatic execution.

M76. The method according to the preceding embodiment, wherein checking for a proper operation of the codebase further comprises determining a frequency of automatic execution of the test routine.

M77. The method according to any of the preceding method embodiments, wherein checking for a proper operation of the codebase comprises determining a frequency of execution for at least a part of the codebase.

M78. The method according to the preceding embodiment, wherein checking for a proper operation of the codebase further comprises determining a frequency of execution for each of a plurality of parts of the codebase.

M79. The method according to the preceding embodiment, wherein checking for a proper operation of the codebase further comprises determining a distribution of the plurality of parts based, at least in part, on the frequency of execution for each of the plurality of parts.

M80. The method according to any of the preceding method embodiments, wherein checking for a proper operation of the codebase comprises checking for an efficiency of at least a part of the codebase.

M81. The method according to the preceding embodiment and with the features of the penultimate embodiment, wherein checking for a proper operation of the codebase comprises checking for the efficiency of each of a plurality of parts of the codebase.

M82. The method according to the preceding embodiment, wherein the plurality of parts comprises the top 10 percent, preferably the top 15 percent, further preferably the top 20 percent, of the most frequently executed parts.

M83. The method according to any of the preceding method embodiments, wherein the data related to a codebase comprises data related to an API layer documentation of the codebase, and wherein checking for a proper operation of the codebase comprises checking that the API layer documentation adheres to an API layer documentation standard.

M84. The method according to any of the preceding method embodiments, wherein checking for a proper operation of the codebase comprises determining a refactoring and/or a revisiting frequency for at least a part of the codebase.

M85. The method according to any of the preceding method embodiments and with the features of embodiment M5, wherein checking for a proper operation of the codebase comprises determining, for each amendment to at least a part of the codebase, the sender node identifier and determining, based thereon, that a plurality of sender node identifiers is associated with the part of the codebase.

M86. The method according to any of the preceding method embodiments and with the features of embodiment M4, wherein the data related to an amendment further comprises data related to a review of the amendment, and wherein checking for a proper operation of the codebase comprises checking that each amendment to the codebase is reviewed.

M87. The method according to any of the preceding method embodiments, wherein checking for a proper operation of the codebase comprises checking for an ability of one or more applications represented by the codebase to be deployed automatically.

M88. The method according to the preceding embodiment, wherein checking for an automated deployment ability comprises checking for an ability to automatically provisioning of deployment infrastructure.

M89. The method according to any of the preceding method embodiments and with the features of embodiment M11, wherein checking for a proper operation of the codebase comprises checking for the association of a trigger identifier with each amendment to the codebase.

M90. The method according to any of the preceding method embodiments, wherein checking for a proper operation of the codebase comprises checking that the codebase can be compiled, built, and bundled without errors.

M91. The method according to any of the preceding method embodiments, wherein an external module/library is used in the codebase, and wherein checking for a proper operation of the codebase comprises checking that no part of the module/library is copied into the codebase.

M92. The method according to the preceding embodiment, wherein checking for a proper operation of the codebase comprises determining licensing information for the module/library.

M93. The method according to any of the 2 preceding embodiments, wherein checking for a proper operation of the codebase comprises determining a version of the module/library used in the codebase.

M94. The method according to any of the preceding method embodiments, wherein the codebase is configured to authenticate/authorize a user based, at least in part, on an authentication/authorization framework/library, and wherein checking for a proper operation of the codebase comprises determining the authentication/authorization framework/library used by the codebase.

M95. The method according to any of the preceding method embodiments, wherein checking for a proper operation of the codebase comprises checking for a presence of a set of allowed/prohibited licenses in the data related to the codebase.

M96. The method according to the preceding method embodiment, wherein
an external module/library is used in the codebase, the external module/library comprising a license,
the data related to the codebase comprises the set of allowed/prohibited licenses,
and wherein checking for a proper operation of the codebase comprises checking that the set of allowed/prohibited licenses comprises the license of the external module/library.

M97. The method according to any of the preceding method embodiments and with the features of embodiment M20, wherein checking for a proper operation of the codebase comprises checking that the data related to performance issues in the codebase comprises all the necessary information.

Below, system embodiments will be discussed. These are abbreviated by the letter 'S' followed by a number. Whenever reference is, herein, made to the system embodiments, these embodiments are meant.

S1. A system configured to:
retrieve from a database, data related to a codebase,
analyze the retrieved data, and
perform, based at least on a result of the analysis of the retrieved data, an automated check for a proper operation of the codebase.

S2. The system according to the preceding embodiment, wherein the data related to a codebase comprise data related to an amendment to the codebase.

S3. The system according to the preceding embodiment, wherein the data related to an amendment comprise any of a time of amendment, a sender node identifier associated with a sender node of the amendment, a message associated with the amendment, a trigger identifier associated with the amendment, a location of the amendment, and a content of the amendment.

S4. The system according to any of the 2 preceding embodiments, wherein the data related to a codebase comprise data related to a plurality of amendments to the codebase.

S5. The system according to any of the preceding system embodiments, wherein the data related to a codebase comprise additional data.

S6. The system according to the preceding embodiment, wherein the additional data comprise resource consumption data for a sender node.

S7. The system according to any of the preceding system embodiments, wherein the system comprises a communication unit configured to communicate with the database.

S8. The system according to any of the 2 preceding embodiments, wherein the system comprises a data processing unit.

S9. The system according to the preceding embodiment, wherein the data processing unit is configured to communicate with the communication unit.

S10. The system according to the preceding embodiment, wherein the data processing unit is configured to send a request to the communication unit to retrieve data from the database.

511. The system according to the preceding embodiment, wherein the data processing unit is configured to receive the retrieved data from the communication unit.

S12. The system according to any of the preceding system embodiments, wherein analyzing the retrieved data comprises transforming the data related to a codebase, and wherein the system is configured to transform the retrieved data.

S13. The system according to the preceding embodiment and with the features of embodiment S8, wherein the system, particularly the data processing unit thereof, comprises a data transform module.

S14. The system according to the preceding embodiment, wherein the data transform module is configured to transform the data retrieved from the database, thereby generating transformed data.

S15. The system according to any of the preceding system embodiments, wherein the system comprises a transformed data database.

S16. The system according to the preceding embodiment and with the features of the penultimate embodiment, wherein the data transform module is configured to send the transformed data to the transformed data database.

S17. The system according to any of the preceding system embodiments and with the features of embodiment S13, wherein the data transform module is configured to clean the retrieved data.

S18. The system according to the preceding embodiment, wherein the data transform module is configured to tag as irrelevant a part of the retrieved data.

S19. The system according to any of the 2 preceding embodiments, wherein the data transform module is configured to remove a part of the retrieved data.

S20. The system according to any of the 3 preceding embodiments, wherein the data transform module is configured to clean the retrieved data based, at least in part, on a heuristic.

S21. The system according to any of the 4 preceding embodiments, wherein the data transform module is configured to clean the retrieved data based, at least in part, on an artificial intelligence-based model.

S22. The system according to any of the preceding system embodiments and with the features of embodiment S13, wherein the data transform module is configured to determine a connection/relationship between a plurality of parts of the retrieved data.

S23. The system according to any of the preceding system embodiments and with the features of embodiments S2, and S13, wherein the data transform module is configured to associate a numerical value with an amendment to the codebase based, at least in part, on the data related to the amendment.

S24. The system according to the preceding embodiment, wherein the data transform module is configured to associate a numerical value with each of a plurality of amendments to the codebase.

S25. The system according to any of the 2 preceding embodiments, wherein the numerical value is based on a complexity of the amendment to the codebase.

S26. The system according to any of the 3 preceding embodiments, wherein the numerical value is at least as large as a pre-defined minimum value.

S27. The system according to any of the 4 preceding embodiments, wherein the numerical value is at most as large as a pre-defined maximum value.

S28. The system according to any of the 5 preceding embodiments, wherein the numerical value comprises a natural number.

S29. The system according to any of the 6 preceding embodiments, wherein the numerical value is associated based, at least in part, on an artificial intelligence-based model.

S30. The system according to any of the preceding system embodiments and with the features of embodiment S13, wherein the data transform module is further configured to standardize the retrieved data.

S31. The system according to any of the preceding system embodiments and with the features of embodiment S8, wherein the data processing unit comprises a data analysis module configured to accept an input and to carry out an analysis on the input.

S32. The system according to the preceding embodiment and with the features of embodiment S13, wherein the data analysis module is configured to receive, as input, the transformed data from the data transform module.

S33. The system according to the penultimate embodiment and with the features of embodiment S16, wherein the data analysis module is configured to retrieve, and accept as input, the transformed data from the transformed data database.

S34. The system according to any of the 3 preceding embodiments, wherein the data analysis module is configured to carry out the analysis on the input based, at least in part, on an artificial intelligence-based model.

S35. The system according to any of the 4 preceding embodiments and with the features of embodiment S4, wherein the data analysis module is configured to identify a plurality of amendments associated with a defined sender node based, at least in part, on the data related to the plurality of amendments.

S36. The system according to the preceding embodiment, wherein the data analysis module is configured determine an active time for the defined sender node based on the data related to the plurality of amendments to the codebase.

S37. The system according to the preceding embodiment and with the features of embodiment S23, wherein the numerical value associated with each of the plurality of amendments is at least as large as a pre-defined minimum.

S38. The system according to any of the preceding embodiments, wherein the location associated with each of the plurality of amendments is comprised in a set of pre-defined locations.

S39. The system according to any of the 3 preceding embodiments, wherein the data analysis module is configured to determine an earliest time of amendment for the defined sender node based on the plurality of amendments identified.

S40. The system according to any of the 4 preceding embodiments, wherein the data analysis module is configured to determine a latest time of amendment for the defined sender node based on the plurality of amendments identified.

S41. The system according to any of the 5 preceding embodiments and with the features of embodiment S6, wherein the system is configured to determine a resource efficiency for the defined sender node.

S42. The system according to any of the 6 preceding embodiments, wherein the system is configured to determine a bus factor for the defined sender node based, at least in part, on the plurality of amendments associated with the defined sender node.

S43. The system according to the preceding embodiment and with the features of embodiment S3, wherein the bus factor is based, at least in part, on the time of amendment for at least one amendment associated with the defined sender node.

S44. The system according to any of the 2 preceding embodiments and with the features of embodiment S23, wherein the bus factor is based, at least in part, on the numerical value associated with at least one amendment associated with the defined sender node.

S45. The system according to any of the 3 preceding embodiments, wherein the bus factor is based, at least in part, on a statistical measure based on the plurality of amendments associated with the defined sender node.

S46. The system according to any of the preceding system embodiments, wherein the system comprises a display unit.

S47. The system according to the preceding embodiment, wherein the system is configured to display a result of analyzing the data related to a codebase.

S48. The system according to any of the 2 preceding embodiments and with the features of embodiment S8, wherein the display unit is configured to communicate with the data processing unit.

S49. The system according to any of the preceding system embodiments, wherein the system is configured to generate a report based, at least in part, on a result of analyzing the data related to a codebase.

S50. The system according to any of the preceding system embodiments, wherein the system is configured to retrieve, and analyze, data related to a plurality of codebases.

S51. The system according to the preceding embodiment, wherein the plurality of codebases comprises a first codebase and a second codebase.

S52. The system according to the preceding embodiment, wherein the system is configured to compare a result of analyzing the data related to the first codebase and the data related to the second codebase.

S53. The system according to the preceding embodiment and with the features of embodiment S47, wherein the system is configured to display data related to a result of the comparison between the result of analyzing the data related to the first codebase and the data related to the second codebase.

S54. The system according to any of the 2 preceding embodiments and with the features of embodiment S49, wherein the report is based, at least in part, on a result of the comparison between the result of analyzing the data related to the first codebase and the data related to the second codebase.

S55. The system according to any of the preceding system embodiments, wherein the system is configured to determine a performance metric for the codebase based on a result of analyzing the data related to the codebase.

S56. The system according to the preceding embodiment, wherein the check for proper operation of the codebase is based, at least in part, on the performance metric for the codebase.

S57. The system according to any of the preceding system embodiments and with the features of embodiment S6, wherein the system is configured to re-allocate resources to the sender node based, at least in part, on a result of analyzing the data related to a codebase.

S58. The system according to any of the preceding system embodiments, wherein the system is configured to perform the method according to any of the preceding method embodiments.

Below, computer program product embodiments will be discussed. These are abbreviated by the letter 'P' followed by a number. Whenever reference is, herein, made to the computer program product embodiments, these embodiments are meant.

P1. A computer program product comprising instructions, when run on a data processing unit of a system according to any of the preceding system embodiments, to perform the method according to any of the preceding method embodiments.

### Brief Figure Description

- Figure 1: depicts a system for performing an automated check for proper operation of a codebase, and
- Figure 2: depicts a method for performing an automated check for proper operation of the codebase.

### Detailed Figure Description

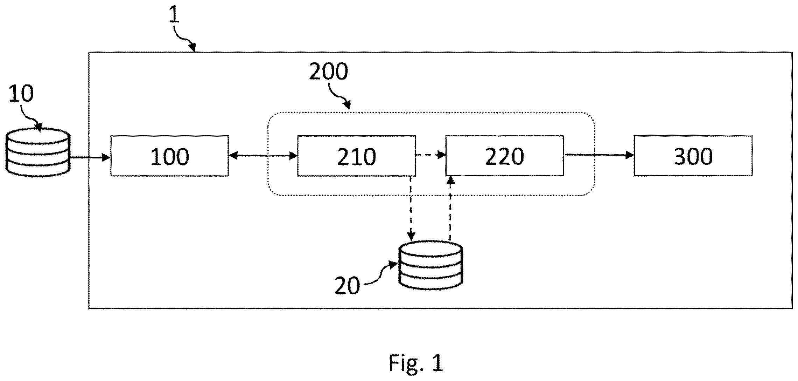

Figure 1 depicts a system 1 configured for performing an automated check for a proper operation of a codebase. Checking for the proper operation of a codebase may be understood to comprise a plurality of checks that may be carried out as described above.

The system 1 may comprise a communication unit 100 configured to communicate with a database 10. The database 10 may comprise data related to the codebase and the system 1, particularly the communication unit 100 thereof, may be configured to retrieve, from the database 10, the data related to the codebase.

The codebase may comprise, for example, a computer program. The codebase may be evolving, or it may have evolved, over time such that one or more amendments have been made from an initial stage of the codebase. In other words, the computer program may have been amended over time. The database 10 may be configured to record one, preferably a plurality, further preferably all, of such amendments. The database 10 may comprise, for example, a Git log, a Subversion log, a Mercurial log, a Github pull request log, a ticketing database associated with the codebase, or any other suitable database.

Note that the data related to a codebase may be distributed over a plurality of databases 10. Further, the database 10 may comprise data related to a plurality of codebases. In particular, the database 10 may comprise data related to a first codebase and a second codebase. The data related to any of the plurality of codebases may comprise any such data as described below.

Alternatively, or additionally, data related to a plurality of codebases may be comprised in a plurality of databases 10, such that data related to a first codebase may be comprised in a first database 10a (for example), and data related to a second codebase may comprised in a second database 10b (for example). In general, it may be understood that each of the databases comprising data related to a codebase, or a part thereof, may support access to the data as described herein. Further generally, it may be understood that data related to a first codebase and a second codebase is available.

Generally, the data related to a codebase may be retrieved from one or more databases 10.

The database 10 may be configured to restrict access to the data and may only allow access to the data in response to a successful authentication of a data retriever. For example, the access may be restricted by requiring a retriever identifier and a password. The communication unit 100 may send a request to the database 10 for retrieving the data along with any of the required details for authentication such as the retriever identifier and the password. The database 10 may be configured to verify the retriever identifier (for example, by verifying that the identifier corresponds to an identifier allowed to access the data) and the password and, in response to a successful verification, allow the communication unit 100 access to the data. Alternatively, or additionally, the database 10 may be configured to allow open access to at least some of the data without requiring a password, for example.

In embodiments, the database 10 may be accessible via a sign-in interface, and the database 10 may be accessed by signing in via the interface. The database 10 may be configured such that only some of the data in database 10 is accessible via the sign-in interface, and additional permissions and/or authentication may be required to access other data. In particular, the accessibility of data related to a codebase stored in the database 10 may vary between codebases.

Data related to a codebase may comprise the codebase, or at least a part thereof. In other words, the codebase may itself be hosted on the database 10. Alternatively, the codebase may be hosted on another database and thus the data related to the codebase may be accessed from a plurality of databases 10 as described above.

Data related to a codebase may comprise data relating to performance issues in the codebase, determined based, at least in part, on the data retrieved from a ticketing database associated with the codebase. Performance issues in the codebase may comprise, for example, runtime errors, or code smells. Further, performance issues may be retrieved from system logs, or from an output of a code analysis.

Data relating to performance issues in the codebase may comprise, for example, data related to bugs in the code. Data related to bugs may comprise, for example, a description of the unexpected behavior, a description of the expected behavior, steps to reproduce the unexpected behavior, and a severity of the bug that may range, for example, from "low" to "critical".

Data related to a codebase may comprise metadata relating to the codebase such as a number of statements comprised in each function comprised in the codebase, a number of functions comprised in each class/module of the codebase, and so on.

Data related to a codebase may comprise additional data related to the codebase. The additional data may comprise, for example, resource consumption data as described further below.

Data related to a codebase may comprise data related to an amendment to the codebase. The data related to an amendment may comprise a time of the amendment. The time of the amendment may be, for example, the time when the data relating to the amendment was added to the database 10. The data relating to an amendment may be sent/added to the database 10 by a sender node. The data relating to an amendment may then comprise an identifier, that may be referred to as a sender node identifier, associated with the sender node of the data.

The data relating to an amendment may comprise a message. For example, the message may comprise information about why the amendment was made. Alternatively, or additionally, the message may indicate an update to the codebase. The data relating to an amendment may further comprise the amendment made to the codebase, or at least a part thereof - determined, for example, by comparing the codebase before and after the amendment was made. In particular, the data relating to an amendment may comprise a number of lines deleted and a number of lines added to the codebase.

The data relating to an amendment may comprise a trigger identifier associated with a trigger for the amendment. In other words, an amendment may be made in response to a trigger, such as a bug in the codebase (as identified from the ticketing database associated with the codebase, for example), for example, and an identifier may be associated to the trigger. Such a trigger identifier may be of advantage in referring to the bug, for example. The trigger identifier may then be added to the database 10 for an amendment directed at addressing the bug, for example. Further exemplarily, a plurality of amendments may be made each of which may be directed at addressing the bug. In this case, the data relating to each of the plurality of amendments may comprise a significantly identical trigger identifier. Alternatively, or additionally, a part of the trigger identifier may be significantly identical in data relating to each of a plurality of amendments. This may be of advantage, for example, when a plurality of amendments is addressed to a set of related bugs, or when a plurality of amendments is addressed to an update to the codebase.

The data relating to an amendment may comprise a location in the codebase where the amendment is made. For example, the location may be determined with respect to any of a containing function, a preceding function, a succeeding function, a feature being implemented at the location, a calling function that uses the amended part of the codebase, or any other suitable reference point.

The system 1 may comprise a data processing unit 200 configured to communicate with the communication unit 100. The data processing unit may be configured to send a request to the communication unit 100 to retrieve data from the database 10. The data processing unit 200 may be configured to receive, from the communication unit 100, in response to sending the request for data retrieval, data retrieved from the database 10.

Further, the data processing unit 200 may be configured to analyze the retrieved data. Analyzing the retrieved data may comprise transforming the retrieved data. The data processing unit 200 may comprise, for example, a module 210 configured to carry out a defined transformation on the retrieved data. An output of the module 210, that may be called a data transform module, may be sent to a module 220, that may be called a data analysis module, configured to carry out an analysis on the transformed data. An input to the module 210 may comprise data retrieved from the database 10. As described above, the data may comprise data related to an amendment to a codebase and/or it may comprise additional data related to a codebase as described above. In particular, the input to the module 210 may comprise data related to the first codebase and/or data related to the second codebase.

The module 210 may comprise one or more modules each configured to carry out a transformation of the data retrieved from the database 10. In the following, exemplary transformations that may be carried out by any of the modules will be described with reference to the module 210. It may be understood, however, that a plurality of modules may be configured to carry out any of the transformations described herein. Further, only some and not all of the transformations described here may be carried out.

An advantage of transforming the data retrieved from the database 10 may be homogenization of the data. For example, as described above, the database 10 may comprise a plurality of databases 10. Any of the plurality of databases 10 may comprise data stored in a format that is not significantly identical to the data format of any other of the plurality of databases 10. The module 210, that may be called a data transform module, may be configured to transform the data such that the data transform module 210 may accept, as input, data from any of the plurality of databases 10, and output transformed data based, at least in part, on the input data, wherein the format of the transformed data is significantly identical for transformed data based, at least in part, on data retrieved from any of the plurality of databases 10. The homogeneity of the transformed data may be of advantage in analyzing the data.

The module 210 may be configured to clean the data retrieved from the database 10. Cleaning the data may comprise removing, or at least tagging as irrelevant, a part of the retrieved data. The part of the retrieved data to be at least tagged as irrelevant may comprise data that may have to be excluded in order to perform the automated check for proper operation of the codebase. A heuristic may be used to determine the part of the data that may be at least tagged as irrelevant. For example, a part of the codebase may be repeated when the same task has to be performed. Alternatively, a part of the codebase may have been taken from another (open-source) codebase, for example. Then, a part of the retrieved data related to the part of the codebase may be at least tagged as irrelevant.

Alternatively, or additionally, the module 210 may clean the retrieved data based, at least in part, on an artificial intelligence-based model. For example, the artificial intelligence-based model may be configured to accept, as input, the retrieved data and to output a label for a part of the retrieved data, wherein the label may indicate that the part is irrelevant. The artificial intelligence-based model may be based on machine learning and may be trained prior to using it for predicting irrelevant parts of the data retrieved from the database 10.

The module 210 may be further configured to determine a connection/relationship between a plurality of parts of the data retrieved from the database 10. The connection may be determined based, for example, on the sender node identifier data, or at least a part thereof. For example, the connection may be determined by means of textual analysis, that may be based, at least in part, on any of fuzzy logic or artificial intelligence, of the data related to the codebase. Determining the connection between the plurality of parts of the retrieved data may be of advantage in, for example, a resource efficiency of a defined sender node, for example.

The module 210 may be configured to associate a numerical value with an amendment to the codebase based on the data related to the amendment. In particular, the module 210 may be configured to associate a numerical value with each of a plurality of amendments to the codebase. The numerical value associated with/assigned to an amendment may represent an impact generated by the amendment. A higher numerical value may, for example, represent a greater impact, and a lower numerical value may represent a lower impact generated by the amendment.

The numerical value associated with an amendment may be of particular advantage in checking for a proper operation of the codebase.

The numerical value may be at least as large as a pre-defined minimum value and may be at most as large as a pre-defined maximum value. For example, if the pre-defined minimum value is 0 and the pre-defined maximum value is 100, the numerical value may only be between 0 and 100 (including either). Further, the numerical value may be restricted to comprise a natural number. Note, however, that the numerical value may not be bounded above or below. The above characterization is intended only as an example and should not be considered limiting.

The numerical value may be based, for example, on a complexity of the amendment made to the codebase. The numerical value may be assigned, for example, at least in part, by means of an artificial intelligence-based model. The artificial intelligence-based model may comprise a model based on machine learning, particularly based on supervised learning. The artificial intelligence-based model may be trained using training data similar to the data retrieved from the database 10, with "correct" (corresponding to desired) numerical values assigned.

Alternatively, or additionally, the numerical value may be assigned based on a heuristic. For example, the numerical value may be related to a number of lines (or statements, as described above) added, modified, or deleted by the amendment.

The number of lines may be scaled based on whether lines were added, modified, or deleted by an amendment. In particular, the numerical value associated with an amendment may be based, at least in part, on a factor calculated using the number of lines added, modified, and deleted by the amendment. For example, an amendment may add 10 lines, delete 2 lines, and modify 4 lines. Then the factor may be calculated by taking a weighted average of the number of lines added, modified, or deleted, with different weights associated with the number of lines added, modified, or deleted. The weights may, for example, be 2:1:4, where the number of lines added is weighed twice as much as the number of lines deleted, and the number of lines modified may be weighed twice as much as the number of lines added. This may be of advantage as more weight may be assigned to lines that are modified and less weight to lines that are added or deleted. In embodiments, however, different weights may be used.

The number of lines may be further scaled by a weight that may depend, for example, on the programming language used for the amendment. Thus, for example, an amendment of 10 lines made in Java, that may be considered a more verbose language, may be weighed lesser than an amendment of 10 lines made in Python, that may be considered a less verbose language.

Further exemplarily, the heuristic may assign the numerical value to the amendment based on a frequency of execution of the amendment vis-a-vis other parts of the codebase in subsequent executions of code comprised in the codebase. Generally, a suitable heuristic may be used, and the choice of heuristic may also be based, at least in part, on the codebase. The transformed data, output from the module 210, may be sent to the module 220 configured to analyze the transformed data. Alternatively, or additionally, the transformed data, output from the module 210 may be sent to a transformed data database 20, from where it may be retrieved by the module 220.

The module 220 may be configured to carry out an analysis based on any of the trigger identifier data, the sender node identifier data, the message data, the time of amendment data, and/or any other data for a codebase as described above. Exemplary analyses carried out by the module 220 will now be described. It may generally be understood that the data processing unit 200 may comprise a plurality of modules 220 and any of the plurality of modules 220 may be configured to carry out an analysis as described herein. Further, the analysis process may also be distributed over a plurality of modules and it may not be necessary that exactly one module is involved in carrying out any analysis as described herein.

The module 220 may be configured to carry out an analysis of the time of amendment data. The module 220 may be configured to extract the time of amendment from data for a plurality of amendments to the codebase and determine a distribution, with respect to a time of day, of the times of amendment. For example, the module 220 may divide a day into time windows, say from 00:00 - 04:00, 04:00 - 08:00, and so on, and determine for each time of amendment the time window it lies in. The module 220 may be configured to output the distribution thus obtained. Alternatively, or additionally, the module 220 may be configured to determine a time of the day with the highest number of amendments made. This may be of advantage in determining, for example, a time of the day when a probability of addressing a bug may be the highest.

The module 220 may be configured to carry out an analysis of the sender node identifier data and the time of amendment data. The module 220 may be configured to extract the sender node identifier and the time of amendment for each amendment from the data for a plurality of amendments. The module 220 may be configured to determine a temporal distribution of amendments for any, preferably each, of the sender nodes (associated with the corresponding sender node identifiers extracted from the data for the plurality of amendments). The temporal distribution may be used to determine, for example, a sender node with the highest temporal rate of amendments, i.e., the highest total number of amendments sent in a unit time interval. Alternatively, or additionally, the temporal distribution may be used to identify, for example, any of the most active, the most efficient, or the most impact-creating (based, for example, on a total numerical value of the amendments sent as described above) sender node in a defined time window of the day. This may be of advantage in determining, for example, senders that would have the highest probability of addressing a bug at a given time of the day, that may be used to better allocate resources.

Further exemplarily, the analysis of the time of amendment data may be used, at least in part, to determine a statistical measure of an active time for any of the sender nodes. Determining the active time may comprise, for example, determining for any of the sender nodes, a time interval between a first and a last amendment associated with the sender node.

Further, the active time may be determined based also on the numerical values, as described above, associated with all the amendments for a sender node. For example, the active time may be determined based on the time interval between a first amendment with an associated numerical value at least as large as a pre-defined minimum and a last amendment with an associated numerical value at least as large as the pre-defined minimum.

A further analysis that may be carried out by the module 220 may be based, at least in part, on the numerical value associated with an amendment as described above, a location in the codebase of the amendment, and on the time of amendment data. The analysis may comprise determining, in a defined time interval, a total numerical value associated with a plurality of amendments such that the location in the codebase of each of the plurality of amendments is comprised in a set of pre-defined locations. The set of pre-defined locations may comprise, for example, all the locations associated with a defined feature implemented in the codebase. Based on the analysis, the module 220 may further determine the distribution of the total numerical value with respect to the sender node. The analysis may further comprise determining a variation in the total (for the defined time interval) numerical value, and/or its distribution with respect to the sender node, over time.

The module 220 may be configured to generate, or accept as input, the temporal distribution according to sender node identifiers as described above. The module 220 may further retrieve additional data from the database 10. The additional data may comprise resource consumption data, or at least data related thereto, for each of the sender nodes (associated with each of the sender node identifiers) used for the temporal distribution described above. The resource may comprise, for example, any of a bandwidth, a computing power, a memory space, or any other suitable resource allocated to the sender node. The resource may alternatively, or additionally, comprise data representing operation of the codebase by secondary factors such as personal data of a sender associated with the sender node of an amendment, for example.

The module 220 may be further configured to determine a bus factor associated with any of the sender nodes. The bus factor may be determined based, at least in part, on the time of amendment data, and/or the numerical value associated with an amendment. Determining the bus factor may comprise determining a statistical measure such as a mean, a median, or any other suitable statistical measure based on the numerical values associated with each of a plurality of amendments sent by a sender node. Preferably, the statistical measure may comprise a weighted mean of the numerical values, wherein the weight assigned to any numerical value may be based, at least in part, on a time of the amendment. For example, the weight may be inversely proportional to the time since the amendment, i.e., an amendment made earlier may be weighted lesser than an amendment made later. An advantage of determining the bus factor as described above may be that the contribution of amendments made at an earlier time are assumed to contribute lesser to the bus factor.

The module 220 may be configured to determine, for example, a resource efficiency associated with one, preferably each, of the sender nodes. The resource efficiency may be determined, for example, by determining a total amount/quantity of resource used in a unit interval of time (determined, for example, by determining a total time interval between an earliest amendment and a latest amendment sent by a sender node). This may be of particular advantage, for example, when a common (or shared) computing resource is distributed among the different sender nodes. The analysis carried out by module 220 may then be used to re-allocate resources among the different sender nodes, for example. Note that, as may be appreciated, the sender nodes may be appropriately configured such that resource consumption data may be determined and be added to the database 10.

Further, the module 220 may be configured to determine a resource efficiency of a sender node based on the numerical value associated with an amendment sent by the sender node. For example, the module 220 may be configured to identify a plurality of amendments sent by the sender node, and determine a mean of the numerical values associated with each of the plurality of amendments.

The module 220 may be configured to carry out an analysis based on any of the trigger identifier data, the sender node identifier data, and the time of amendment data for a codebase. For example, the module 220 may be configured to determine a time interval between an earliest and a latest amendment for data comprising the same trigger identifier. This may be of advantage in determining an efficiency in resolving bugs, for example. The module 220 may carry out the same analysis, based also on sender node identifier data, for example, by determining a time interval between an earliest and a latest amendment for data comprising the same, or significantly identical, trigger identifier and the same, or significantly identical, sender node identifier.

The module 220 may be configured to carry out an analysis based further on the message data in the data related to a codebase. For example, the module 220 may be configured to determine a temporal distribution of updates to the codebase based on the message data. The module 220 may be further configured, for example, to compare the temporal distribution of updates to the codebase with the resource consumption data. This may, for example, be of advantage in determining, at least in part, an overall efficiency of resource consumption. The module 220 may be configured to determine a degree of similarity between the first codebase and the second codebase based, at in part, upon the data related to the first codebase and the data related to the second codebase. The degree of similarity may be determined, for example, based on the number of distinct sender nodes that may have sent an amendment to the codebase, in the last year. The degree of similarity may also be based, at least in part, on a time interval between the first and the last amendment to the codebase. The degree of similarity may be used, for example, to determine whether or not, in a subsequent step, the data related to the first and to the second codebase may be compared.

Based on a result of the degree of similarity described above, the module 220 may be configured to retrieve data, such as resource consumption data of sender nodes and data related to amendments, related to the first codebase and to the second codebase from the database 10. The module 220 may be configured to then compare the data related to the second codebase with the data related to the first codebase. Comparing the data related to the first codebase and the data related to the second codebase may comprise, for example, a total number of amendments made and the time interval over which they were made. Comparing the data related to the first codebase and data related to the second codebase may comprise, for example, an average number of amendments sent to the database 10 by a sender node. Comparing the data related to the first codebase and data related to the second codebase may comprise, for example, an average resource efficiency of sender nodes.

The module 220 may be further configured to generate, for example, a listing of the results of the analysis carried out by the module 220. The listing of the results may be sent, for example, to a display unit 300 of the system 1. Additionally, or alternatively, the listing of the results may be used to determine a performance metric, such as a resource efficiency score, for the codebase. The system 1 may check for the proper operation of the codebase based, at least in part, on the performance metric. Additionally, or alternatively, the listing of the results may be used to re-allocate resources among the sender nodes.

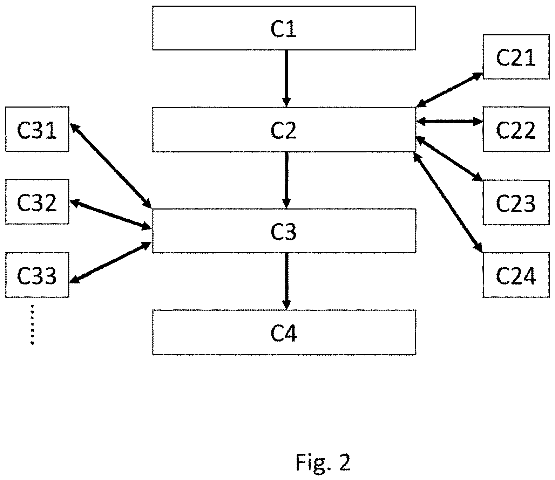

Figure 2 depicts an exemplary embodiment of the method according to the present invention. Note that embodiments of the present invention may not comprise all of the steps depicted in Figure 2. The exemplary embodiment depicted in Figure 2 comprises a first step C1, that may comprise retrieving data related to a codebase from a database 10. In a second step C2, the data related to a codebase may be transformed, by means of the module 210 as described above, for example, and the transformed data may be sent to a transformed data database 20.

The step C2 may comprise a plurality of sub-steps, viz., the 4 sub-steps C21, C22, C23, and C24, depicted in Figure 2. The sub-step C21 may comprise, for example, cleaning the data retrieved from the database 10. The sub-step C22 may comprise, for example, determining connections/relationships/association between different parts of the cleaned or "raw" data. A further sub-step C23 may comprise associating a numerical value to an amendment to the codebase based, at least in part, on data related to the amendment retrieved from the database 10. Note that the numerical value may be associated based on either the "raw" data retrieved from the database 10, or on the cleaned data obtained after sub-step C21, or also on the cleaned and linked data obtained after the sub-step C22. The sub-step C24 may comprise standardizing the data as described above. As may be appreciated, the sub-step C24 may be carried out on the data after any of the previous steps/sub-steps.

The step C3 may comprise retrieving the transformed data from the transformed data database 20. Alternatively, or additionally, the transformed data may be received after the step C2 directly. The transformed data may be analyzed in the step C3 to check for a proper operation of the codebase. A plurality of analyses may be carried out in the step C3, depicted in Figure 2 as the sub-steps C31, C32, C33, ....

A final step C4 may comprise generating a report based on results of the analysis carried out in step C3. Note that the above steps C1 to C3 may be carried out for a plurality of codebases as described above. The step C4 may then also comprise generating a report based on a comparison of the results of the analysis for each of the plurality of codebases.

The data related to a codebase as described above may additionally, or alternatively, comprise any of data related to a documentation of the codebase, a wiki corresponding to the codebase, a ticketing database associated with the codebase, or, generally, any knowledge base relating to the codebase, comprising details, for example, on how to use the codebase, or parts thereof, or charts such as class diagrams depicting connections between different parts of the codebase, or any other such know-how related to the codebase.

In particular, the data related to a codebase may comprise data related to amendments to any of the documentation of the codebase, the wiki corresponding to the codebase, the knowledge base relating to the codebase, or to the ticketing database associated with the codebase. Amendments to the knowledge base may comprise, for example, addition of new entries, updating of existing entries, editing of existing entries for better clarity, or any other suitable amendments. Amendments to the ticketing database may comprise, for example, addition of tickets to the ticketing database, or change of status of pending tickets, for example, from "to do" to "in process", or from "in process" to "test", or from "test" to "done".

Embodiments of the present invention may also be understood to be directed to such amendments. In particular, a numerical value may be assigned to each of these amendments, as described above for amendments to the codebase, and any of the analyses described above for amendments to the codebase, may be carried out also for the amendments to the documentation of the codebase, the wiki corresponding to the codebase, the knowledge base relating to the codebase, or to the ticketing database associated with the codebase. Further particularly, the determination of the resource efficiency of a sender node may also be based, at least in part, on the numerical value associated with such amendments associated with the sender node. As described above for amendments to the codebase, a statistical average may be calculated for the numerical values associated with a plurality of amendments to the documentation of the codebase, the wiki corresponding to the codebase, the knowledge base relating to the codebase, or to the ticketing database associated with the codebase, wherein different weights may be assigned to different amendments depending on an impact, importance, or complexity associated with the amendment.

Overall, embodiments of the present technology aim to provide a method and a system for automatically checking for proper operation of a codebase that may be more efficient and robust, and that may provide insights into improving operation of the codebase.

While in the above, a preferred embodiment has been described with reference to the accompanying drawings, the skilled person will understand that this embodiment was provided for illustrative purpose only and should by no means be construed to limit the scope of the present invention, which is defined by the claims.

Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

## Claims

1. A method comprising:
retrieving from a database, data related to a codebase,
analyzing the retrieved data,
performing, based at least on a result of the analysis of the retrieved data, an automated check for a proper operation of the codebase,
retrieving machine code-based information for the codebase and
modeling, based on the machine code-based information, a check for a proper operation of the codebase, wherein the modeling of the check is, at least in part, an automated modeling.

2. The method according to the preceding claim, wherein the data related to a codebase comprises data related to an amendment to the codebase, preferably data related to a plurality of amendments to the codebase.

3. The method according to the preceding claim, wherein the amendment is sent to the codebase by a sender node, and wherein the data related to an amendment comprises data related to the sender node.

4. The method according to any of the preceding claims, wherein analyzing the retrieved data comprises transforming the data related to a codebase.

5. The method according to the preceding claim and with the features of claim 2, wherein transforming the data comprises associating a numerical value with an amendment to the codebase based, at least in part, on the data related to the amendment.

6. The method according to any of the 2 preceding claims, wherein analyzing the retrieved data comprises analyzing the transformed data.

7. The method according to the preceding claim and with the features of claim 3, wherein the data related to an amendment comprises an identifier associated with the sender node, and wherein analyzing the transformed data comprises extracting the sender node identifier for each of a plurality of amendments.

8. The method according to any of the preceding claims and with the features of claim 3, wherein the data related to a codebase comprises a resource consumption data, or at least data related thereto, of the sender node.

9. The method according to the preceding claim and with the features of claim 6, wherein analyzing the transformed data is based on the resource consumption data, or data related thereto, of the sender node, and wherein analyzing the transformed data comprises determining a resource consumption efficiency of the sender node.

10. The method according to any of the preceding claims and with the features of claims 3 and 6, wherein analyzing the transformed data comprises determining a bus factor for the sender node.

11. A system configured to:
retrieve from a database, data related to a codebase,
analyze the retrieved data,
perform, based at least on a result of the analysis of the retrieved data, an automated check for a proper operation of the codebase,
wherein the system is configured to generate a report based, at least in part, on a result of analyzing the data related to a codebase.

12. The system according to the preceding claim, wherein the system is configured to determine a performance metric for the codebase based on a result of analyzing the data related to the codebase.

13. The system according to the preceding claim, wherein the data related to a codebase comprises data related to a sender node, and wherein the system is configured to re-allocate resources to the sender node based, at least in part, on a result of analyzing the data related to a codebase.

14. The system according to any of the claims 11 to 13, wherein the system comprises a data processing unit, the data processing unit further comprising a data transform module, wherein the data transform module is configured to determine a connection/relationship between a plurality of parts of the retrieved data.

15. The system according to any of the claims 11 to 14, wherein the system comprises a data processing unit, wherein the data processing unit comprises a data analysis module configured to accept an input and to carry out an analysis on the input, and wherein the data analysis module is configured to carry out the analysis on the input based, at least in part, on an artificial intelligence-based model.

16. A computer program product comprising instructions, when run on a data processing unit of a system according to any of the claims 11 to 14, to perform the method according to any of the claims 1 to 10.
